# EUROPEAN PATENT APPLICATION

(11) **EP 4 357 233 A1**
(43) Date of publication of application: **24.04.2024**
(21) Application number: 22863937.3
(22) Date of filing: 18.04.2022
(51) Int. Cl.: B63B 25/16, C01C 1/02, F02B 43/10, F17C 11/00, B01D 53/14, B01D 53/58, B01D 53/78, F02M 21/02, F02M 25/00, B63H 21/14, B63H 21/38

(54) **FLOATING BODY**

(30) Priority: 31.08.2021 JP 2021140875
(71) Applicant: Mitsubishi Shipbuilding Co., Ltd., Yokohama-shi Kanagawa 220-8401 (JP)
(72) Inventor: YAMADA Daisuke, Yokohama-shi, Kanagawa 220-8401 (JP); SAKURAI Hideaki, Tokyo 100-8332 (JP)
(74) Representative: Studio Torta S.p.A.
(86) International application number: PCT/JP2022/018079
(87) International publication number: WO 2023/032347

(57) **Abstract**

This floating body is provided with: a floating main body; an absorption tank which is provided to the floating main body, and in which an absorbent liquid that is capable of absorbing ammonia is retained; an atmosphere release line which is capable of releasing the vapor phase fraction within the absorption tank to the atmosphere; an ammonia introduction unit which guides the ammonia in the floating main body to the absorbent liquid; and a solubility adjustment unit which is capable of adjusting the solubility of ammonia in the absorbent liquid.

## Description

### Technical Field

The present disclosure relates to a floating structure.

This application claims priority to Japanese Patent Application No. 2021-140875, filed in Japan on August 31, 2021, the contents of which are incorporated herein by reference.

### Background Art

In a floating structure such as a ship, in a case where ammonia is transported and supplied as fuel for a power plant, or in a case where ammonia is used as fuel for a main engine or the like, leakage of ammonia can occur in a compartment such as an equipment chamber accommodating equipment that handles ammonia. In a case where ammonia leakage occurs in such a compartment, it is assumed that the leaked ammonia is vaporized and leaks to an outside of the compartment.

In PTL 1, a technique has been provided for preventing an ammonia leak to an outside of a compartment by providing a sealed duct that communicates with an inside of the compartment, spraying water inside the duct, absorbing ammonia into the water inside the duct, and creating a negative pressure in the compartment. In PTL 1, the water that has absorbed ammonia is returned to a water tank and circulated again to the spray nozzle, or is discharged to another treatment facility.

### Citation List

### Patent Literature

[PTL 1] Japanese Patent No. 4356939

### Summary of Invention

### Technical Problem

By the way, in the floating structure, there is a case where ammonia and another fuel such as light oil are switched and used. In a case where the fuel is switched in this manner, purging with an inert gas that does not react with ammonia is performed to discharge the ammonia remaining in an ammonia fuel system. Therefore, a large amount of the remaining ammonia may be discharged in a short time. In this case, similar to PTL 1, if trying to remove ammonia by absorbing ammonia into water, a required amount of water also increases as the amount of discharged ammonia increases. However, since a space inside the floating structure is limited, it may not be possible to secure a storage place for a large amount of the water that has absorbed ammonia. Further, since there is a possibility of affecting the environment, the water containing ammonia cannot be released as it is into water around which the floating structure floats. Therefore, it is desired to perform detoxification treatment on water that has absorbed ammonia on the floating structure.

As a method for removing ammonia from water that has absorbed ammonia, for example, there is a method using acid such as dilute sulfuric acid. However, acid such as dilute sulfuric acid may be difficult to obtain at a port of call, a mooring place, or the like, and there is a problem that a burden on a worker increases because handling requires skill.

Furthermore, a harmful effect of high-concentration ammonia discharged by purging can also be rendered harmless by combusting the ammonia without absorbing the ammonia in water. However, since the purging of ammonia occurs irregularly and needs to be completed in a short time, there is a problem that the combustion device always requires a pilot light, leading to an increase in fuel consumption.

The present disclosure is made to solve the above problems, aiming to provide a floating structure capable of detoxifying an absorbing liquid that has absorbed ammonia while suppressing an increase in a burden on a worker and fuel consumption.

### Solution to Problem

The following configuration is adopted to solve the above problems.

A floating structure according to the present disclosure includes a floating main structure that floats on water, an absorption tank that is provided in the floating main structure and stores an absorbing liquid that is capable of absorbing ammonia, an atmosphere open line that is capable of releasing a gas phase portion within the absorption tank to atmosphere, an ammonia introduction unit that introduces ammonia in the floating main structure into the absorbing liquid stored in the absorption tank, and a solubility adjustment unit that is capable of adjusting solubility of the ammonia in the absorbing liquid.

### Advantageous Effects of Invention

According to the floating structure of the above aspect, the ammonia can be removed while suppressing an increase in a burden on a worker and fuel consumption. Brief Description of Drawings

Fig. 1 is a side view of a floating structure according to a first embodiment of the present disclosure.
Fig. 2 is a diagram showing a schematic configuration of a pipe system and an ammonia detoxification device that perform fuel purging in the first embodiment of the present disclosure.
Fig. 3 is a diagram corresponding to Fig. 2 in a second modification example of the first embodiment of the present disclosure.
Fig. 4 is a diagram corresponding to Fig. 2 in a third modification example of the first embodiment of the present disclosure.
Fig. 5 is a diagram corresponding to Fig. 2 in a fourth modification example of the first embodiment of the present disclosure.
Fig. 6 is a diagram corresponding to Fig. 2 in a fifth modification example of the first embodiment of the present disclosure.
Fig. 7 is a diagram corresponding to Fig. 2 in a sixth modification example of the first embodiment of the present disclosure.
Fig. 8 is a diagram corresponding to Fig. 2 in a second embodiment of the present disclosure.
Fig. 9 is a diagram corresponding to Fig. 8 in a modification example of the second embodiment of the present disclosure.

### Description of Embodiments

### [First Embodiment]

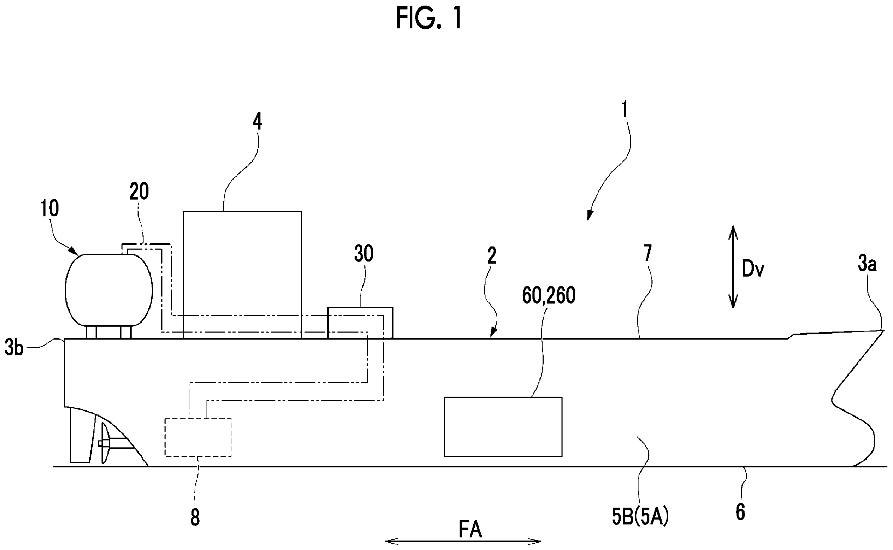

Hereinafter, a floating structure according to a first embodiment of the present disclosure will be described with reference to the drawings. Fig. 1 is a side view of a floating structure according to the first embodiment of the present disclosure.

### (Configuration of Floating Structure)

As shown in Fig. 1, a floating structure 1 of the embodiment includes a floating main structure 2, a superstructure 4, a combustion device 8, an ammonia tank (fuel tank) 10, a pipe system (fuel line) 20, and a compartment 30, and an ammonia detoxification device 60. The floating structure 1 of the present embodiment will be described with a ship that can navigate by a main engine or the like as an example. A ship type of the floating structure 1 is not limited to a specific ship type. Examples of the ship type of the floating structure 1 include a liquefied gas carrier, a ferry, a RORO ship, a vehicle carrier, a passenger ship, and the like.

The floating main structure 2 has a pair of ship sides 5A and 5B and a ship bottom 6 that form an outer shell thereof. The ship sides 5A and 5B include a pair of ship side skins respectively forming right and left ship sides. The ship bottom 6 includes a ship bottom skin that connects the ship sides 5A and 5B. The outer shell of the floating main structure 2 is formed in a U shape in a cross section orthogonal to a bow-stern direction FA by the pair of ship sides 5A and 5B and the ship bottom 6.

The floating main structure 2 further includes an upper deck 7 that is a through deck which is disposed in the uppermost layer. The superstructure 4 is formed on the upper deck 7. An accommodation space and the like are provided in the superstructure 4. In the floating structure 1 of the present embodiment, for example, a cargo space (not shown) for loading cargo is provided closer to a bow 3a side than the superstructure 4 in the bow-stern direction FA.

The combustion device 8 is a device that generates heat energy by combusting fuel, and is provided inside the floating main structure 2. Examples of the combustion device 8 include an internal combustion engine used as a main engine for propelling the floating structure 1, an internal combustion engine used in a power generation facility that supplies electricity to an inside of a ship, a boiler that generates steam as a working fluid, and the like. In the combustion device 8 of the present embodiment, as fuel, ammonia and another fuel such as light oil different from ammonia can be switched and used.

The ammonia tank 10 is a tank that stores liquid ammonia (in other words, liquefied ammonia). The ammonia tank 10 is installed on the upper deck 7 closer to a stern 3b side than the superstructure 4. Disposition of the ammonia tank 10 is an example and is not limited to the disposition on the upper deck 7 to the stern 3b side than the superstructure 4.

The pipe system 20 connects the combustion device 8 and the ammonia tank 10, and is configured to be capable of supplying at least the ammonia stored in the ammonia tank 10 to the combustion device 8.

The compartment 30 is a compartment that accommodates ammonia-related equipment. The compartment 30 in the present embodiment is provided on the upper deck 7 closer to the bow 3a side than the superstructure 4. The above-described pipe system 20 connects the combustion device 8 and the ammonia tank 10 via the inside of the compartment 30. Here, the ammonia-related equipment means all equipment that handles ammonia, and examples thereof include ammonia fuel equipment that handles ammonia and ammonia cargo equipment that handles ammonia as cargo. In the following description, the compartment 30 in which ammonia fuel equipment is accommodated will be described, but the compartment 30 in which ammonia cargo equipment is accommodated may be used.

The compartment 30 of the present embodiment is a fuel supply equipment chamber and accommodates ammonia fuel equipment that constitutes a part of the pipe system 20. Examples of the ammonia fuel equipment accommodated in the fuel supply equipment chamber include a pump that pumps ammonia from the ammonia tank 10 to the combustion device 8, a heater that heats the ammonia sent to the combustion device 8, an electric valve, and the like. The compartment 30 accommodating the ammonia fuel equipment is not limited to the fuel supply equipment chamber. The compartment 30 accommodating the ammonia fuel equipment may be, for example, an ammonia fuel pressure regulation valve chamber, an ammonia fuel intake chamber (in other words, a bunker station), or the like.

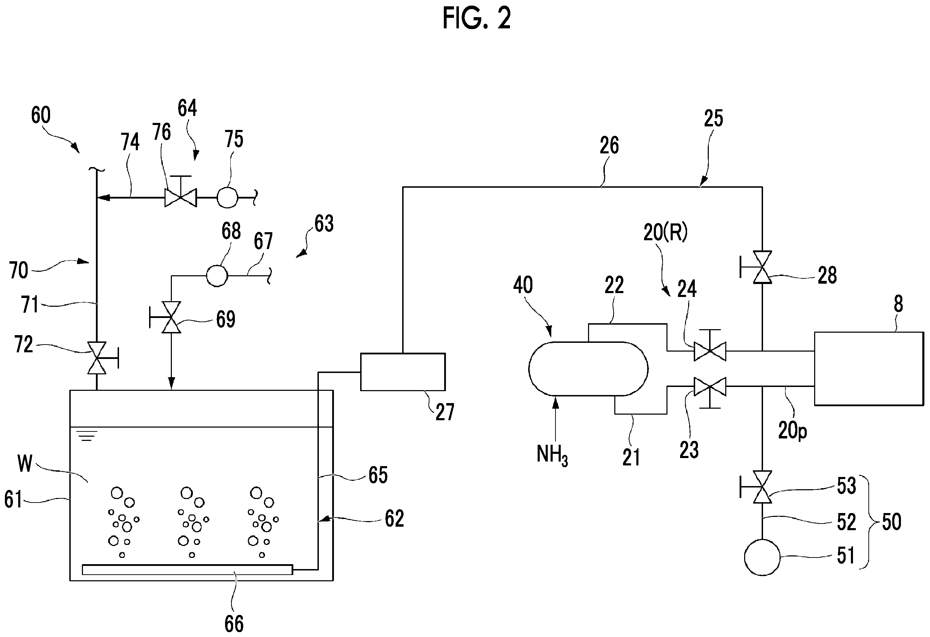

Fig. 2 is a diagram showing a schematic configuration of a pipe system and an ammonia detoxification device that perform fuel purging in the first embodiment of the present disclosure.

As shown in Fig. 2, the floating structure 1 of the present embodiment includes an ammonia buffer tank 40 that temporarily stores ammonia supplied from the ammonia tank 10. The ammonia buffer tank 40 is installed in the middle of the pipe system 20 between the ammonia tank 10 and the combustion device 8. In addition, a purge gas supply device 50 is connected to the pipe system 20.

The pipe system 20 includes each of a supply pipe 21, a return pipe 22, opening-closing valves 23 and 24, and a purge discharge line 25 between the ammonia buffer tank 40 and the combustion device 8. The supply pipe 21 and the return pipe 22 each connect the ammonia buffer tank 40 and the combustion device 8. The supply pipe 21 supplies ammonia from the ammonia buffer tank 40 to the combustion device 8. The return pipe 22 returns excess ammonia remaining without being used as fuel in the combustion device 8 to the ammonia buffer tank 40. The supply pipe 21 is provided with an ammonia pressurizing pump that pressurizes and pumps ammonia toward the combustion device 8, and an ammonia heat exchanger that heats the ammonia pressurized by the ammonia pressurizing pump (neither is shown).

The opening-closing valve 23 is provided in the supply pipe 21. The opening-closing valve 24 is provided in the return pipe 22. These opening-closing valves 23 and 24 are always set in an open state when the combustion device 8 is in operation. On the other hand, the opening-closing valves 23 and 24 are set in a closed state when the combustion device 8 is stopped, for example. Flow paths formed inside the supply pipe 21 and the return pipe 22 are blocked as the opening-closing valves 23 and 24 are set in a closed state.

The purge gas supply device 50 performs so-called purging, in which the ammonia in a flow channel R through which ammonia as the fuel of the combustion device 8 flows is replaced with an inert gas (purge gas) such as nitrogen. The purge gas supply device 50 includes a purge gas supply unit 51, a purge gas supply pipe 52, and a purge gas supply valve 53. An inert gas generated inside the floating main structure 2 by an inert gas generating device (not shown) or an inert gas stored in an inert gas tank (not shown) provided in the floating main structure 2 in advance can be used as the inert gas, for example. The inert gas may be any gas that does not chemically react when in contact with ammonia.

The purge gas supply unit 51 supplies the inert gas to the purge gas supply pipe 52.

The purge gas supply pipe 52 connects the purge gas supply unit 51 and the flow channel R. More specifically, the purge gas supply pipe 52 connects the purge gas supply unit 51 and a purge target region 20p of the flow channel R. Examples of the purge target region 20p in the present embodiment includes the supply pipe 21 closer to a combustion device 8 side than the opening-closing valve 23, the return pipe 22 closer to the combustion device 8 side than the opening-closing valve 24, and the flow channel R formed inside the combustion device 8. The purge gas supply pipe 52 shown in the present embodiment is connected to the purge target region 20p of the supply pipe 21 among the purge target regions 20p.

The purge gas supply valve 53 is provided in the purge gas supply pipe 52. The purge gas supply valve 53 is set in a closed state at a normal time, blocking supply of the inert gas from the purge gas supply unit 51 to the purge target region 20p. Here, the normal time refers to a time when ammonia can be supplied to the combustion device 8, such as a time when the combustion device 8 is in operation. During the normal time, the opening-closing valves 23 and 24 are set in an open state, ammonia can be supplied from the ammonia buffer tank 40 to the combustion device 8 through the supply pipe 21, and excess ammonia is returned from the combustion device 8 to the ammonia buffer tank 40.

The purge gas supply valve 53 is transitioned from a closed state to an open state at a time of an emergency stop or a long-term stop of the combustion device 8. In other words, a closed state is operated to an open state, when purging the ammonia remaining in the purge target region 20p. At this time, the supply of ammonia from the ammonia buffer tank 40 to the combustion device 8 is set in a stopped state. And the opening-closing valves 23 and 24 of the present embodiment are set in a closed state. Next, when the purge gas supply valve 53 is transitioned from a closed state to an open state, an inert gas can be supplied from the purge gas supply unit 51 to the purge target region 20p. In a case where the remaining liquid ammonia is returned to the ammonia buffer tank 40 in an initial stage of purging, the opening-closing valves 23 and 24 may be appropriately set in an open state.

The purge discharge line 25 is branched and connected to the return pipe 22. The purge discharge line 25 of the present embodiment branches from the return pipe 22 between the opening-closing valve 24 and the combustion device 8. The purge discharge line 25 guides the liquid ammonia purged by the purge gas supply device 50, and a mixed fluid of the liquid ammonia and gaseous ammonia purged by the purge gas supply device 50 and the inert gas to the ammonia detoxification device 60.

The purge discharge line 25 includes a purge discharge line main body 26, an ammonia temporary storage portion 27, and an opening-closing valve 28. The purge discharge line main body 26 is a pipe that connects the return pipe 22 and the ammonia temporary storage portion 27. The ammonia temporary storage portion 27 separates and vaporizes the liquid and the gas introduced by the purge discharge line main body 26. In other words, the ammonia temporary storage portion 27 vaporizes the liquid ammonia introduced by the purge discharge line main body 26 and the liquid ammonia contained in the mixed fluid introduced by the purge discharge line main body 26 to introduce a gas containing gaseous ammonia (hereinafter, referred to as an ammonia gas) to the ammonia detoxification device 60. The opening-closing valve 28 is set in a closed state at a normal time, and is operated from a closed state to an open state when performing purging by the purge gas supply device 50.

The ammonia detoxification device 60 includes an absorption tank 61, an ammonia introduction unit 62, a solubility adjustment unit 63, an atmosphere open line 70, and an exhaust gas dilution unit 64.

The absorption tank 61 is provided in the floating main structure 2 and stores an absorbing liquid W that is capable of absorbing ammonia. The absorption tank 61 in the present embodiment is a ballast tank provided in the floating main structure 2. Water around which the floating main structure 2 floats (for example, seawater or freshwater) is introduced into the absorption tank 61 by a pump (not shown) and can be stored as the absorbing liquid W. That is, the absorbing liquid W (liquid phase) and a gas phase are present in the absorption tank 61. The absorption tank 61 is a so-called normal pressure tank, and a pressure of the gas phase is usually the atmospheric pressure. Further, since the absorption tank 61 of the present embodiment is a ballast tank, the water stored in the absorption tank 61 can be released into the water around the floating main structure 2 through a ballast water treatment device (not shown) or the like. The absorption tank 61 is not limited to a ballast tank, and may be, for example, a seawater tank or a fresh water tank provided separately from a ballast tank.

The ammonia introduction unit 62 introduces the ammonia in the floating main structure 2 into the absorbing liquid W stored in the absorption tank 61. The ammonia introduction unit 62 of the present embodiment includes an introduction line 65 which is a pipe that introduces ammonia into the absorption tank 61, and a diffuser pipe 66 that is connected to the introduction line 65 and releases an ammonia gas as small bubbles into the absorbing liquid W. The introduction line 65 of the present embodiment is connected to the above-described ammonia temporary storage portion 27, and introduces the gaseous ammonia separated by gas-liquid separation or vaporized in the ammonia temporary storage portion 27 as ammonia in the floating main structure 2 into the absorbing liquid W. Further, the diffuser pipe 66 of the present embodiment extends along a bottom surface of the absorption tank 61, and is formed such that air bubbles released from the diffuser pipe 66 spread over the entire absorbing liquid W. Here, the gas released from the diffuser pipe 66 is released into the absorbing liquid W by utilizing the pressure of the inert gas of the purge gas supply device 50. Here, the proportion of the inert gas contained in the gas introduced into the absorbing liquid W from the ammonia temporary storage portion 27 increases as the purging progresses.

The solubility adjustment unit 63 is configured to be capable of adjusting solubility of ammonia in the absorbing liquid W. The solubility adjustment unit 63 in the first embodiment is capable of adjusting the solubility of ammonia in the absorbing liquid W by adjusting a concentration of the ammonia gas in the gas phase of the absorption tank 61. Here, the gas phase of the absorption tank 61 and the absorbing liquid W (liquid phase) tend to reach a gas-liquid equilibrium state. That is, as an ammonia concentration in the absorbing liquid W increases, the ammonia concentration in the gas phase also gradually increases. On the other hand, when the ammonia concentration in the gas phase decreases, the ammonia in the liquid phase is desorbed by a partial pressure difference and is sequentially supplied to the gas phase, so that the solubility of the absorbing liquid W decreases.

The solubility adjustment unit 63 of the first embodiment includes a first diluting gas supply line 67, a first blower 68, and a first valve 69. The first diluting gas supply line 67 is a pipe that is capable of introducing air or an inert gas into the gas phase of the absorption tank 61. In the first diluting gas supply line 67 of the present embodiment, air can be introduced into the gas phase of the absorption tank 61. For example, an upper end of the first diluting gas supply line 67 is open above the upper deck 7, and a lower end of the first diluting gas supply line 67 is connected to an upper wall of the absorption tank 61. In a case where the first diluting gas supply line 67 introduces an inert gas, the inert gas of the purge gas supply device 50 may be supplied.

The first blower 68 is provided in the middle of the first diluting gas supply line 67, and sends the air or the inert gas of the first diluting gas supply line 67 toward the absorption tank 61. For the first blower 68, for example, a variable speed blower can be used. The first valve 69 is provided in the middle of the first diluting gas supply line 67, and opens and closes a flow path of the first diluting gas supply line 67. As the first blower 68, a blower that operates at a constant speed can also be used. In this case, a valve whose opening degree can be adjusted need only be used as the first valve 69 so that a flow rate of the air supplied into the absorption tank 61 can be adjusted.

The solubility adjustment unit 63 configured as described above adjusts the ammonia concentration in the gas phase of the absorption tank 61 to a predetermined range of ammonia concentration (for example, 0 to 10 vol%) lower than that in the saturated state.

The atmosphere open line 70 can open the gas phase within the absorption tank 61 to the atmosphere. The atmosphere open line 70 of the present embodiment also serves as an air vent pipe of the absorption tank 61 which is a ballast tank. The atmosphere open line 70 of the present embodiment has a release line main body 71 that is a pipe, and an atmosphere open valve 72 that opens and closes a flow path in the release line main body 71. A lower end of the release line main body 71 is connected to the upper wall of the absorption tank 61, and an upper end of the release line main body 71 is open above the upper deck 7. The atmosphere open valve 72 in the first embodiment is always set in an open state. It should be noted that the atmosphere open valve 72 need only be provided as needed and may be omitted.

The exhaust gas dilution unit 64 is configured to be capable of diluting the gas in the gas phase of the absorption tank 61, which is released into the atmosphere through the atmosphere open line 70, with a diluting gas. The exhaust gas dilution unit 64 of the present embodiment includes a second diluting gas supply line 74, a second blower 75, and a second valve 76. The exhaust gas dilution unit 64 has the same configuration as the solubility adjustment unit 63 described above. The second diluting gas supply line 74 is a pipe that is capable of introducing air or an inert gas into the atmosphere open line 70. In the second diluting gas supply line 74 of the present embodiment, air can be introduced into the atmosphere open line 70. For example, one end of the second diluting gas supply line 74 is open above the upper deck 7, and the other end of the second diluting gas supply line 74 joins and is connected to the middle of the atmosphere open line 70. In a case where the second diluting gas supply line 74 introduces an inert gas, the inert gas of the purge gas supply device 50 may be supplied. The exhaust gas dilution unit 64 need only be provided as needed, and may be omitted in a case where an ammonia concentration of the gas flowing through the atmosphere open line 70 is sufficiently low.

### (Effects of Action)

The floating structure 1 of the first embodiment includes the floating main structure 2 that floats on water, the absorption tank 61 that is provided in the floating main structure 2 and stores the absorbing liquid W that is capable of absorbing ammonia, the atmosphere open line 70 that is capable of releasing the gas phase within the absorption tank 61 to atmosphere, the ammonia introduction unit 62 that introduces ammonia in the floating main structure 2 into the absorbing liquid W stored in the absorption tank 61, and the solubility adjustment unit 63 that is capable of adjusting the solubility of the ammonia in the absorbing liquid W.

In this way, the absorbing liquid W stored in the absorption tank 61 can absorb the ammonia in the floating main structure 2. And, by adjusting the solubility of ammonia in the absorbing liquid W, it is possible to adjust the rate at which ammonia is desorbed from the absorbing liquid W of the absorption tank 61 to the gas phase. That is, it is possible to use the absorbing liquid W as a buffer for temporarily storing ammonia and to gradually desorb ammonia from the absorbing liquid W in the absorption tank 61 to the gas phase to release a gas having a low ammonia concentration into the atmosphere. In addition, the solubility of ammonia in the absorbing liquid W can be an extremely low value by utilizing the partial pressure difference between the liquid phase and the gas phase, that is, the absorbing liquid is substantially detoxified by desorbing most of the ammonia absorbed in the absorbing liquid W to the gas phase, thereby it is not necessary to remove the ammonia in the absorbing liquid W by using an acid such as dilute sulfuric acid. In addition, a pilot light for combusting and detoxifying ammonia is not required. Therefore, the absorbing liquid W that has absorbed ammonia can be detoxified while suppressing an increase in a burden on a worker and fuel consumption.

The solubility adjustment unit 63 of the first embodiment adjusts the ammonia concentration in the gas phase in the absorption tank 61.

In this way, a speed at which the ammonia absorbed by the absorbing liquid W is desorbed to the gas phase can be adjusted. For example, when the ammonia concentration in the gas phase is lowered, the partial pressure difference between the gas and the liquid becomes large, the ammonia absorbed in the absorbing liquid W is immediately desorbed into the gas phase, and the solubility of the ammonia in the absorbing liquid W is lowered. Therefore, the desorption of ammonia from the absorbing liquid W to the gas phase can be accelerated. In addition, if the ammonia concentration in the gas phase is increased, the partial pressure difference between the gas and the liquid becomes small, the ammonia absorbed by the absorbing liquid W stays in the absorbing liquid W, and the solubility of the ammonia increases. Therefore, the desorption of ammonia from the absorbing liquid W to the gas phase can be delayed.

In the first embodiment, the ammonia introduction unit 62 further introduces the ammonia discharged by the purge discharge line 25 into the absorbing liquid W.

Even the ammonia discharged by the purge, which is generated irregularly and needs to be completed in a short time, can be absorbed by the absorbing liquid W and then be gradually desorbed to the gas phase. Therefore, it is not necessary to detoxify the ammonia discharged by the purge discharge line 25 in a short time. Therefore, since ammonia can be detoxified without using a large-sized treatment device, it is possible to suppress enlargement of an ammonia detoxification device and enlargement of the floating structure 1.

In the first embodiment, the solubility adjustment unit 63 and the exhaust gas dilution unit 64 are further included.

For example, after the absorbing liquid W absorbs ammonia, the first valve 69 is set in an open state and air is supplied from the first blower 68, so that the ammonia concentration in the gas phase can be reduced. And, since the gas-liquid equilibrium state tends to be maintained in the absorption tank 61, the ammonia absorbed in the absorbing liquid W can be gradually desorbed to the gas phase. And, if the ammonia in the absorbing liquid W is desorbed into the gas phase so that, for example, the ammonia concentration in the absorbing liquid W becomes an extremely low value, the absorbing liquid W is substantially detoxified and can be released to the water around which the floating main structure 2 floats.

Immediately after the first blower 68 starts to supply air to the gas phase, a gas having a relatively high ammonia concentration is introduced into the atmosphere open line 70. However, since the air can be caused to join by the second blower 75 with the second valve 76 of the exhaust gas dilution unit 64 set in an open state, it is possible to suppress the release of a gas having a high ammonia concentration into the atmosphere. Further, when the ammonia concentration of the gas introduced into the atmosphere open line 70 is not high, the second blower 75 of the exhaust gas dilution unit 64 can be set in a stopped state and the second valve 76 can be set in a closed state, thereby energy saving can be aimed.

### (First Modification Example of First Embodiment)

In the first embodiment, a case where the solubility adjustment unit 63, the exhaust gas dilution unit 64, and the atmosphere open valve 72 are operated has been described. However, the ammonia concentration in the release line main body 71 of the atmosphere open line 70, the ammonia concentration in the gas phase of the absorption tank 61, and the ammonia concentration of the absorbing liquid W may be detected by the sensor, and based on a detection result of these ammonia concentrations, for example, the opening and closing of the first valve 69, the second valve 76, and the atmosphere open valve 72, and adjustment of a supply amount of air or the inert gas by the first blower 68 and the second blower 75 may be automatically performed by a control device.

### (Second Modification Example of First Embodiment)

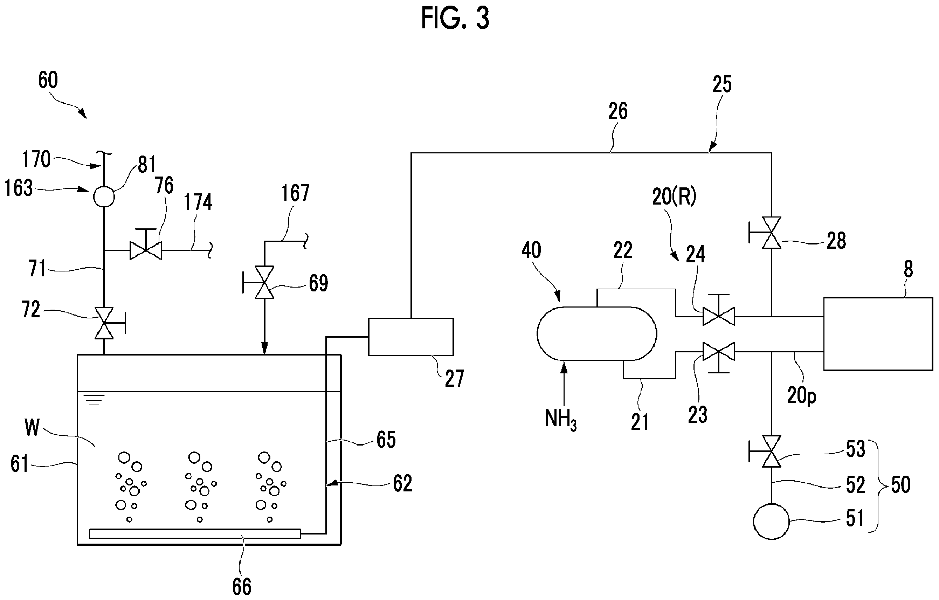

In the first embodiment, a case where the solubility adjustment unit 63 adjusts the ammonia concentration in the gas phase by pushing air into the gas phase of the absorption tank 61 by the first blower 68 has been described. However, the configuration for adjusting the ammonia concentration in the gas phase is not limited to the configuration of the first embodiment. In the description of the second modification example, the same reference numerals will be assigned to the same parts as those in the first embodiment described above, and duplicate description will be omitted. Fig. 3 is a diagram corresponding to Fig. 2 in the second modification example of the first embodiment of the present disclosure.

As shown in Fig. 3, the floating structure 1 of the second modification example includes a solubility adjustment unit 163 instead of the exhaust gas dilution unit 64 and the solubility adjustment unit 63 of the first embodiment. The solubility adjustment unit 163 includes a first diluting gas supply line 167, the first valve 69, and a third blower 81. The first diluting gas supply line 167 in the second modification example is different from the first diluting gas supply line 67 of the first embodiment only in that the first blower 68 is not provided. Similarly, a second diluting gas supply line 174 is different from the second diluting gas supply line 74 of the first embodiment only in that the second blower 75 is not provided.

An atmosphere open line 170 includes the release line main body 71, the atmosphere open valve 72, and the third blower 81. That is, the atmosphere open line 170 in the second modification example is different from the atmosphere open line 70 of the first embodiment in that the third blower 81 is provided.

The third blower 81 is provided in the middle of the release line main body 71 of the atmosphere open line 170, and is capable of sucking the gas in the gas phase and sending the gas into the atmosphere. The second diluting gas supply line 174 joins and is connected to the release line main body 71 between the third blower 81 and the absorption tank 61. The second diluting gas supply line 174 is capable of allowing air or an inert gas to join the gas flowing in the atmosphere open line 70. The second valve 76 opens and closes a flow path in the second diluting gas supply line 174.

In the second modification example of the first embodiment, similarly to the first embodiment, ammonia is introduced into the absorbing liquid W by the ammonia introduction unit 62, and the ammonia is absorbed by the absorbing liquid W. The ammonia absorbed by the absorbing liquid W is gradually desorbed to the gas phase because of the partial pressure difference between the gas and the liquid. Here, when the third blower 81 is activated, the gas in the gas phase is sucked by the atmosphere open line 70. At this time, the first valve 69 of the first diluting gas supply line 167 is set in an open state, and air or an inert gas is introduced into the gas phase of the absorption tank 61. As a result, the ammonia concentration in the gas phase can be reduced. On the other hand, if the third blower 81 is stopped, the increase in the ammonia concentration in the gas phase is continued.

In addition, when the ammonia concentration of the gas in the gas phase flowing into the flow path of the atmosphere open line 170 is high, the second valve 76 is opened to allow air or an inert gas to join the gas in the gas phase flowing into the atmosphere open line 70, thereby it is possible to suppress the release of a gas having a high ammonia concentration into the atmosphere. Therefore, it is possible to adjust the solubility of the absorbing liquid W in the same manner as in the first embodiment while reducing the number of blowers as compared with the first embodiment.

### (Third Modification Example of First Embodiment)

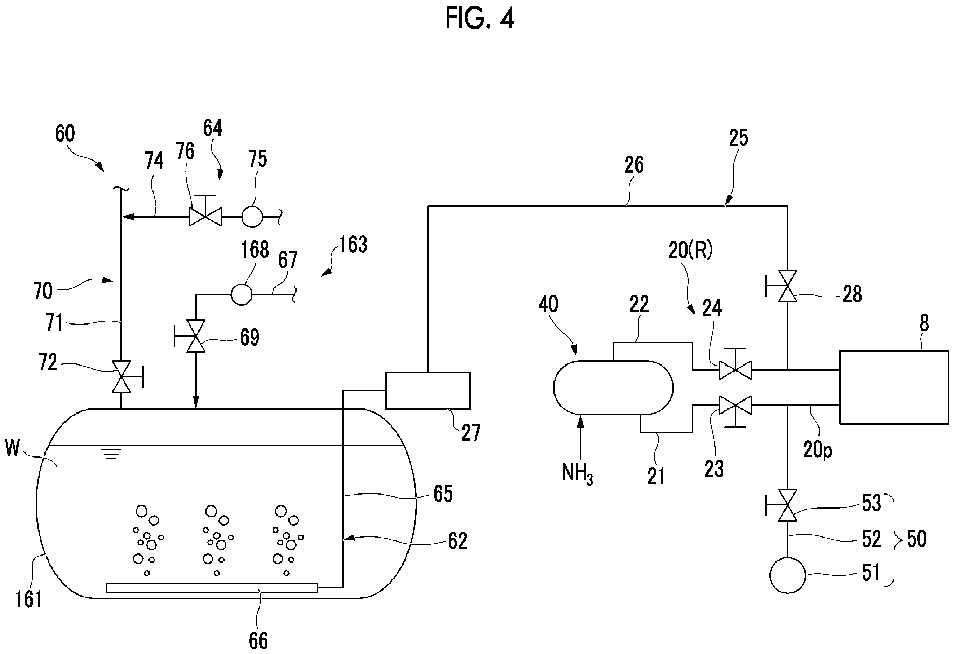

In the first embodiment, a case where the absorption tank 61 is a ballast tank which is a normal pressure tank has been described as an example. However, the absorption tank 61 is not limited to a normal pressure tank. In the description of the third modification example, the same reference numerals will be assigned to the same parts as those in the first embodiment described above, and duplicate description will be omitted. Fig. 4 is a diagram corresponding to Fig. 2 in the third modification example of the first embodiment of the present disclosure.

As shown in Fig. 4, in the floating structure 1 of the third modification example, the absorption tank 61 of the first embodiment is replaced with an absorption tank 161 of a pressurizing type. Further, in the third modification example, the first blower 68 of the first embodiment is replaced with a first compressor 168.

According to the floating structure 1 of the third modification example of the first embodiment, the absorbing liquid W absorbs ammonia by the ammonia introduction unit 62 with the first valve 69 and the atmosphere open valve 72 set in a closed state. The ammonia absorbed by the absorbing liquid W tends to reach a gas-liquid equilibrium state to be gradually desorbed to the gas phase. On the other hand, if the first valve 69 is transitioned from the state to an open state and the air or an inert gas is pumped to the absorption tank 161 by the first compressor 168, the pressure of the gas phase of the absorption tank 161 increases. As a result, a pressure inside the absorption tank 161 is increased, and the solubility of ammonia in the absorbing liquid W can be increased. In the third modification example, the solubility adjustment unit 163 is configured by the first diluting gas supply line 67, the first compressor 168, and the first valve 69.

In addition, according to the third modification example, by increasing the solubility of ammonia in the absorbing liquid W, a larger amount of ammonia can be absorbed by the absorbing liquid W. Further, for example, by adjusting an opening degree of the atmosphere open valve 72 and an opening degree of the first valve 69, a flow rate of the exhaust gas discharged from the absorption tank 161 is made smaller than a flow rate of the diluting gas introduced into the absorption tank 161, so that a pressure in the absorption tank 161 can be maintained at a state higher than the atmospheric pressure while releasing the gas in the gas phase into the atmosphere through the atmosphere open line 70.

In the third modification example as well, similarly to the first embodiment described above, the gas flowing into the atmosphere open line 70 can be diluted by the exhaust gas dilution unit 64.

In the description of the third modification example, a case where the pressure in the absorption tank 161 is adjusted by the first diluting gas supply line 67, the first compressor 168, and the first valve 69 has been described, but the present disclosure is not limited to this configuration. For example, in a case where a gas introduced into the absorbing liquid W by the ammonia introduction unit 62 is a mixed gas of an ammonia gas and an inert gas such as nitrogen, the inert gas introduced into the absorbing liquid W accumulates into the gas phase without being absorbed into the absorbing liquid W. Then, the pressure of the gas phase can be increased. Therefore, when the pressure of the gas phase can be increased in this way, the first diluting gas supply line 67, the first compressor 168, and the first valve 69 can be omitted. In this case, the solubility adjustment unit of the present disclosure is configured by the ammonia introduction unit 62 and the atmosphere open valve 72.

### (Fourth to Sixth Modification Examples of First Embodiment)

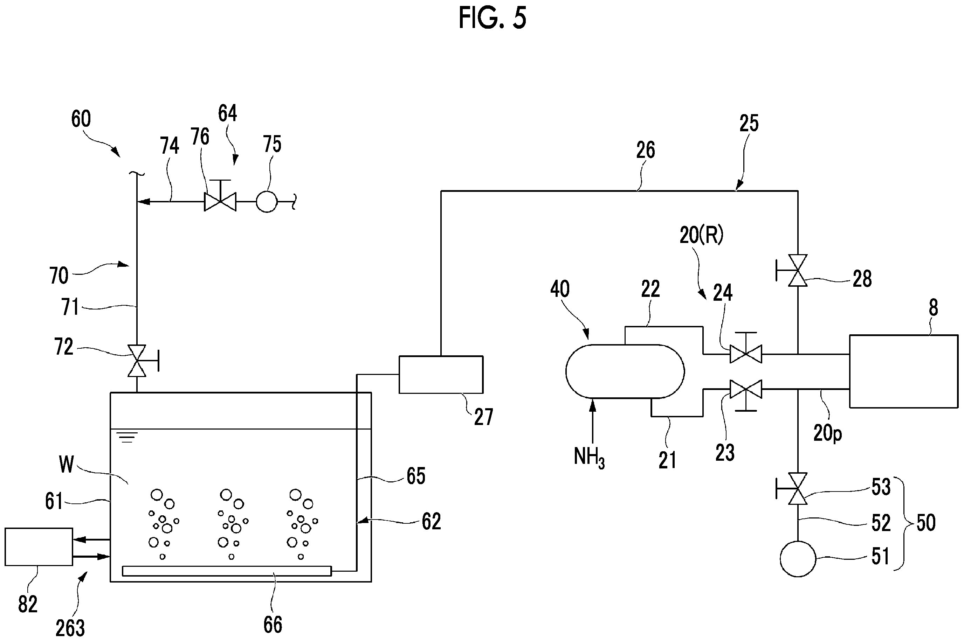

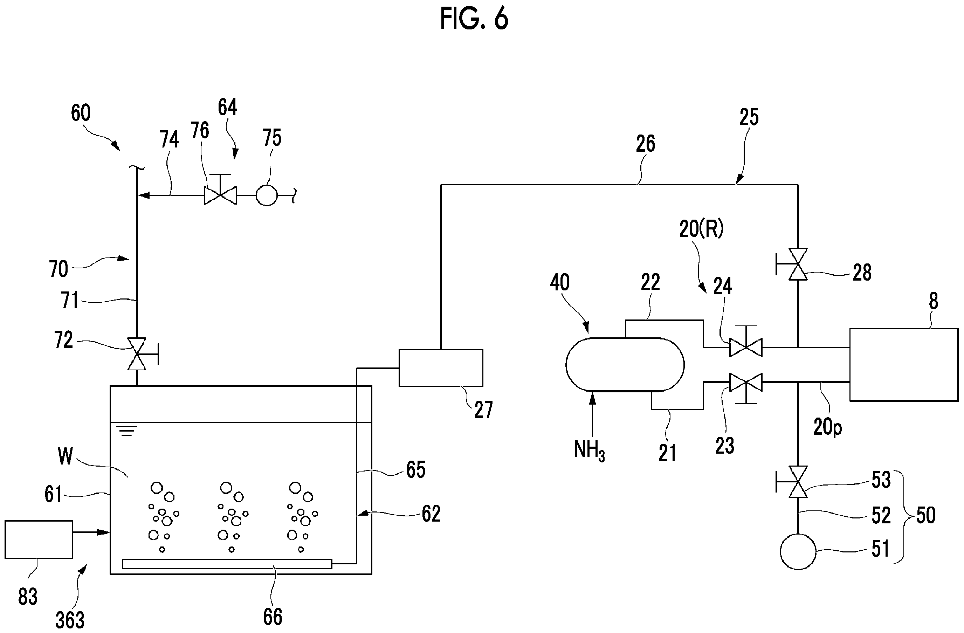

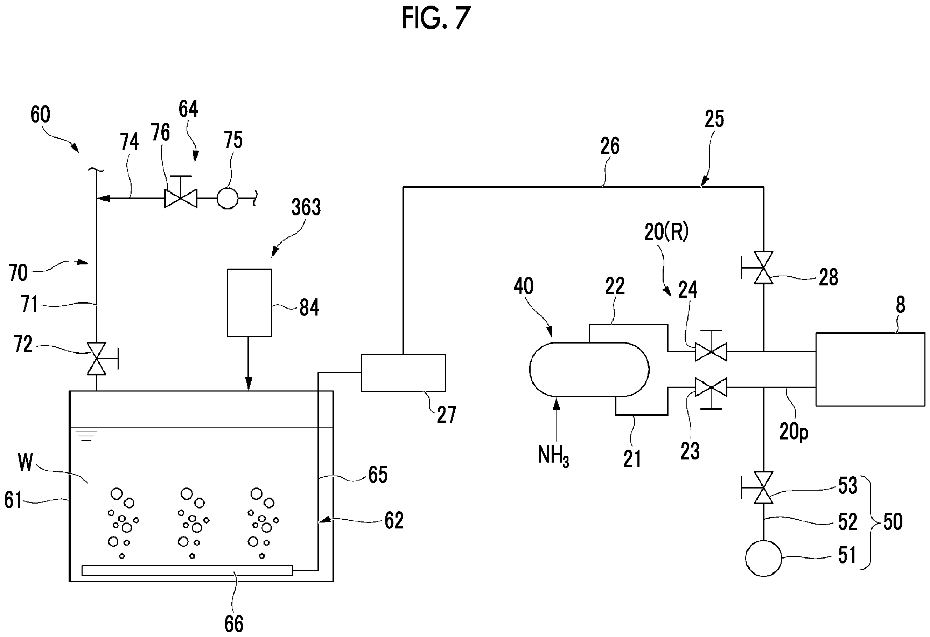

Fig. 5 is a diagram corresponding to Fig. 2 in the fourth modification example of the first embodiment of the present disclosure. Fig. 6 is a diagram corresponding to Fig. 2 in the fifth modification example of the first embodiment of the present disclosure. Fig. 7 is a diagram corresponding to Fig. 2 in the sixth modification example of the first embodiment of the present disclosure.

The solubility adjustment unit 63 of the first embodiment has described a case where the solubility of ammonia in the absorbing liquid W is adjusted by adjusting the ammonia concentration in the gas phase. In addition, the solubility adjustment unit 163 of the third modification example of the first embodiment has described a case where the solubility of ammonia in the absorbing liquid W is adjusted by adjusting the pressure of the gas phase. However, the configurations of the solubility adjustment units 63 and 163 are not limited to the configurations of the first embodiment and the third modification example of the first embodiment. For example, as in the fourth modification example shown in Fig. 5, as a solubility adjustment unit 263, an absorbing liquid temperature adjustment unit 82 that adjusts a temperature of the absorbing liquid W may be provided. The absorbing liquid temperature adjustment unit 82 can perform at least one of heating of the absorbing liquid W and cooling of the absorbing liquid W. In a case where the temperature of the absorbing liquid W is high, a desorption rate of ammonia contained in the absorbing liquid W to the gas phase can be increased. In a case where the temperature of the absorbing liquid W is low, the desorption rate of ammonia contained in the absorbing liquid W to the gas phase can be decreased.

In addition, as in the fifth modification example shown in Fig. 6, an absorbing liquid pH adjustment device 83 that adjusts pH of the absorbing liquid W may be provided as the solubility adjustment unit 363, or as in the sixth modification example shown in Fig. 7, an acidic fluid introduction device 84 that introduces a slightly acidic liquid or a slightly acidic gas into the gas phase may be provided, thereby adjusting the pH of the absorbing liquid W and the gas phase, and thus adjusting the solubility of ammonia in the absorbing liquid W. Further, a configuration for adjusting the ammonia concentration in the gas phase, a configuration for adjusting the temperature of the absorbing liquid W, a configuration for adjusting the pH of the absorbing liquid W, a configuration for adjusting the pH of the gas phase, and a configuration for adjusting the pressure of the gas phase may be appropriately combined to adjust the solubility of ammonia.

### (Second Embodiment)

Next, the floating structure 1 according to the second embodiment of the present disclosure will be described based on the drawings. The second embodiment is different from the first embodiment described above only in that the ammonia leaked in the compartment 30 in which the ammonia-related equipment is accommodated is introduced into the absorbing liquid W. Therefore, in the second embodiment, Fig. 1 will be incorporated, and the same parts as those in the above-described first embodiment will be described with the same reference numerals, and duplicate description will be omitted.

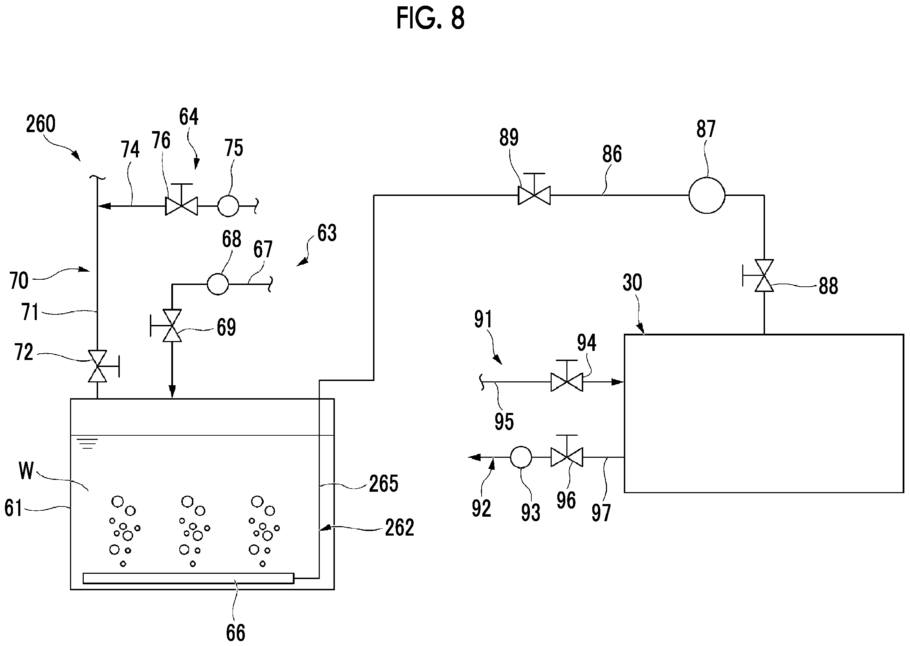

Fig. 8 is a diagram corresponding to Fig. 2 in the second embodiment of the present disclosure.

A floating structure 1 of the second embodiment includes a floating main structure 2, a superstructure 4, a combustion device 8, an ammonia tank 10, a pipe system 20, a compartment 30, and an ammonia detoxification device 260.

As shown in Fig. 8, the ammonia detoxification device 260 includes an absorption tank 61, an ammonia introduction unit 262, a solubility adjustment unit 63, and an exhaust gas dilution unit 64.

Similarly to the ammonia introduction unit 62 of the first embodiment, the ammonia introduction unit 262 introduces the ammonia in the floating main structure 2 into the absorbing liquid W stored in the absorption tank 61. And the ammonia introduction unit 262 of the present embodiment includes an introduction line 265 which is a pipe that introduces ammonia into the absorption tank 61, and a diffuser pipe 66 that is connected to the introduction line 265 and releases an ammonia gas as small bubbles into the absorbing liquid W. Similar to the diffuser pipe 66 of the first embodiment, the diffuser pipe 66 extends along a bottom surface of the absorption tank 61, and is formed such that air bubbles released from the diffuser pipe 66 spread over the entire absorbing liquid W.

The introduction line 265 of the second embodiment is connected to the compartment 30. The introduction line 265 introduces the gaseous ammonia leaked and vaporized in the compartment 30 into the absorbing liquid W as the ammonia in the floating main structure 2. Air supply equipment 91 and exhaust equipment 92 for ventilation are provided in the compartment 30. The air supply equipment 91 includes an air supply damper 94 and an air supply duct 95, and the exhaust equipment 92 includes an exhaust fan 93, an exhaust damper 96, and an exhaust duct 97.

The introduction line 265 includes a line main body 86, an introduction blower 87, an introduction blower inlet damper 88, and an introduction damper 89. The line main body 86 is a pipe having a flow path inside. The introduction blower 87 is provided in the middle of the line main body 86, and sends the gas in the line main body 86 toward the absorption tank 61. As the introduction blower 87, for example, a variable speed blower can be used.

The introduction blower inlet damper 88 is provided in the line main body 86 on an inlet side of the line main body 86, which is closer to the compartment 30 than the introduction blower 87, and opens and closes a flow path of the line main body 86. The introduction blower inlet damper 88 is set in a closed state at a normal time when no ammonia leakage has occurred in the compartment 30, and is set in an open state in a case where ammonia leakage has occurred in the compartment 30. The introduction blower inlet damper 88 need only be appropriately provided or may be omitted.

The introduction damper 89 is provided in the line main body 86 between the introduction blower 87 and the absorption tank 61 in the line main body 86, and opens and closes the flow path of the line main body 86. The introduction damper 89 is set in a closed state at a normal time when no ammonia leakage has occurred in the compartment 30, and is set in an open state in a case where ammonia leakage has occurred in the compartment 30.

As the introduction blower 87, a blower that operates at a constant speed can also be used. In this case, a damper whose opening degree can be adjusted need only be used as the introduction blower inlet damper 88 and the introduction damper 89 so that a flow rate of the air supplied into the absorption tank 61 can be adjusted.

In the second embodiment, in a case where ammonia leakage occurs in the compartment 30, for example, the exhaust fan 93 is set in a stopped state, the exhaust damper 96 is set in a closed state, and the air supply damper 94, the introduction blower inlet damper 88, and the introduction damper 89 are set in an open state by a worker. Further, for example, the worker initiates activation of the introduction blower 87. And, at this time, the rotation speed of the introduction blower 87 and the opening degree of the air supply damper 94 are adjusted such that the pressure inside the compartment 30 is maintained at a pressure lower than the atmospheric pressure. By setting the pressure inside the compartment 30 to be lower than the atmospheric pressure in this manner, ammonia leakage to the outside of the compartment 30 is suppressed.

### (Effects of Action)

The ammonia introduction unit 262 of the second embodiment introduces the ammonia leaked in the compartment 30 into the absorbing liquid W of the absorption tank 61. Therefore, the ammonia leaked in the compartment 30 can be removed, and the absorbing liquid W that has absorbed the ammonia can be detoxified as in the first embodiment. As a result, the absorbing liquid W that has absorbed ammonia can be detoxified while suppressing an increase in a burden on a worker and fuel consumption.

### (Modification Example of Second Embodiment)

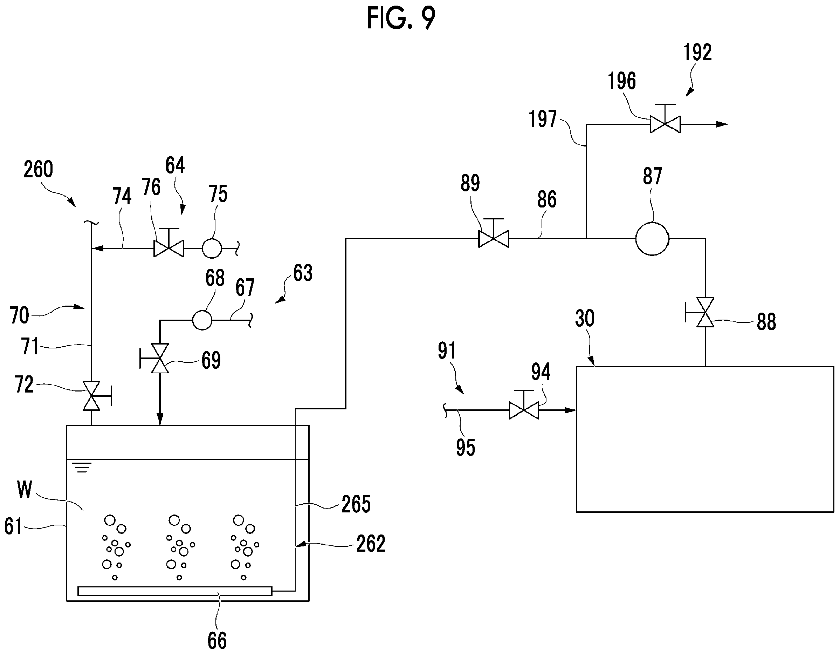

Fig. 9 is a diagram corresponding to Fig. 8 in a modification example of the second embodiment of the present disclosure.

In the second embodiment, a case where the exhaust equipment 92 is connected to the compartment 30 has been described. However, for example, the exhaust equipment 92 of the second embodiment may be omitted, and the configuration as in the modification example of the second embodiment shown in Fig. 9 may be provided. In the modification example of the second embodiment, exhaust equipment 192 is connected to the line main body 86 between the introduction blower 87 and the introduction damper 89 in the line main body 86 of the ammonia introduction unit 262. The exhaust equipment 192 is equipment for exhaust of the compartment 30, and includes an exhaust damper 196 and an exhaust line 197.

The exhaust damper 196 is provided in the middle of the exhaust line 197 and opens and closes a flow path in the exhaust line 197. The exhaust damper 196 is set in an open state at a normal time when no ammonia leakage has occurred in the compartment 30, and is set in a closed state in a case where ammonia leakage has occurred in the compartment 30. The exhaust line 197 branches from the line main body 86 between the introduction blower 87 and the introduction damper 89 in the line main body 86, and forms the flow path that releases the air in the compartment 30 to an outside of the floating main structure 2 at a normal time when no ammonia leakage has occurred in the compartment 30.

In the modification example of the second embodiment, the introduction blower 87 is always set in an activated state. And, at a normal time when no ammonia leakage has occurred in the compartment 30, the exhaust damper 196, the introduction blower inlet damper 88, and the air supply damper 94 are set in an open state, and the introduction damper 89 is set in a closed state by the worker. As a result, outside air is taken into the compartment 30 from the air supply equipment 91, and the air inside the compartment 30 is released to an outside of the floating main structure 2 through the line main body 86 and the exhaust line 197. In other words, the inside of the compartment 30 is ventilated.

On the other hand, in a case where ammonia leakage occurs in the compartment 30, for example, the exhaust damper 196 is set in a closed state, and the air supply damper 94, the introduction blower inlet damper 88, and the introduction damper 89 are set in an open state by a worker. And, at this time, as in the second embodiment, the pressure inside the compartment 30 is maintained at a pressure lower than the atmospheric pressure. As in the second embodiment, the introduction blower inlet damper 88 may be omitted even in the modification example of the second embodiment.

Therefore, according to the modification example of the second embodiment, in addition to the effects of the action of the second embodiment, the introduction blower 87 is not only used as a blower for removing the ammonia leaked in the compartment 30, but is also used as an exhaust fan for ventilating the compartment 30 at a normal time, so that the number of parts can be reduced.

### <Other Embodiments>

Above, the embodiments of the present disclosure have been described in detail with reference to the drawings, but the specific configuration is not limited to the embodiments, and includes design changes and the like within a scope not departing from the gist of the present disclosure.

For example, in each of the embodiments, a case where the floating structure 1 is a ship that can navigate by a main engine or the like has been described. However, the floating structure 1 is not limited to a ship as long as it is a floating structure that is capable of storing ammonia.

In addition, a case where the atmosphere open line 70 or 170 is open to the atmosphere has been described in each embodiment and each modification example. However, before the gas is released into the atmosphere from the atmosphere open line 70 or 170, the ammonia contained in the gas flowing through the atmosphere open line 70 or 170 may be removed by an ammonia removing device such as a scrubber. In this way, it is possible to further reduce the ammonia concentration of the gas released into the atmosphere. Here, since an amount of ammonia contained in the gas flowing through the atmosphere open line 70 or 170 is small, a small-capacity ammonia removing device such as a small scrubber need only be used, and it is possible to suppress the decrease in a degree of freedom in installing the ammonia removing device in the floating main structure 2.

In the second embodiment, a case where a worker manually performs opening-closing operation for the exhaust fan 93, the exhaust damper 96, the air supply damper 94, the introduction blower inlet damper 88, and the introduction damper 89, and performs activating operation and stopping operation for the introduction blower 87 has been described. In addition, in a modification example of the second embodiment, a case where a worker manually performs opening-closing operation for the exhaust damper 196, the air supply damper 94, the introduction blower inlet damper 88, and the introduction damper 89 has been described. However, the configuration is not limited to a configuration in which a worker manually operates. For example, the opening-closing operation for the exhaust fan 93, the exhaust damper 96 or 196, the air supply damper 94, the introduction blower inlet damper 88, and the introduction damper 89, and the activating operation and the stopping operation for the introduction blower 87 may be automatically controlled by a control device, based on a detection result of ammonia leakage such as the ammonia concentration in the compartment 30.

### <Additional Notes>

The floating structure 1 described in the embodiment is ascertained as follows, for example.
(1) According to a first aspect, a floating structure 1 includes a floating main structure 2 that floats on water, an absorption tank 61 or 161 that is provided in the floating main structure 2 and stores an absorbing liquid W that is capable of absorbing ammonia, an atmosphere open line 70 that is capable of releasing a gas phase within the absorption tank 61 or 161 to atmosphere, an ammonia introduction unit 62 or 262 that introduces ammonia in the floating main structure 2 into the absorbing liquid W stored in the absorption tank 61 or 161, and a solubility adjustment unit 63, 163, 263, or 363 that is capable of adjusting solubility of the ammonia in the absorbing liquid W.

Examples of the absorbing liquid W include seawater and fresh water. An example of the absorption tank 61 is a ballast tank.

Accordingly, the absorbing liquid W stored in the absorption tank 61 or 161 can absorb the ammonia in the floating main structure 2. And, by adjusting the solubility of ammonia in the absorbing liquid W by the solubility adjustment unit 63, 163, 263, or 363, it is possible to adjust the rate at which ammonia is desorbed from the liquid phase to the gas phase of the absorption tank 61 or 161. Accordingly, it is possible to use the absorbing liquid W as a buffer for temporarily storing ammonia and to gradually desorb ammonia from the absorbing liquid W in the absorption tank 61 or 161 to the gas phase to release a gas having a low ammonia concentration into the atmosphere. In addition, the solubility of ammonia in the absorbing liquid W can be an extremely low value by utilizing the partial pressure difference between the liquid phase and the gas phase, that is, the absorbing liquid is substantially detoxified by desorbing most of the ammonia absorbed in the absorbing liquid W to the gas phase, thereby it is not necessary to remove the ammonia in the absorbing liquid W by using an acid such as dilute sulfuric acid. In addition, a pilot light for combusting and detoxifying ammonia is not required. Therefore, the absorbing liquid W that has absorbed ammonia can be detoxified while suppressing an increase in a burden on a worker and fuel consumption.

(2) The floating structure 1 according to a second aspect is the floating structure 1 of (1), in which the solubility adjustment unit 63, 163, 263, or 363 adjusts the solubility of the ammonia by adjusting at least one of a concentration of the ammonia in the gas phase, a temperature of the absorbing liquid W, pH of the absorbing liquid W, pH of the gas phase, and a pressure of the gas phase.

Accordingly, the solubility of ammonia in the absorbing liquid W can be easily adjusted.

(3) The floating structure 1 according to a third aspect is the floating structure 1 of (1) or (2), the floating structure 1 further includes a combustion device 8 that uses the ammonia as fuel, a fuel tank 10 that stores the ammonia as fuel, a fuel line 20 that supplies the ammonia from the fuel tank 10 to the combustion device 8, a purge gas supply device 50 that supplies a purge gas into the fuel line 20, and a purge discharge line 25 that discharges the ammonia in the fuel line 20 pressed by the purge gas, in which the ammonia introduction unit 62 introduces the ammonia discharged by the purge discharge line 25 into the absorbing liquid W.

Accordingly, the absorbing liquid W stored in the absorption tank 61 or 161 can absorb the ammonia discharged from the purge discharge line 25 in a short time, while the ammonia absorbed in the absorbing liquid W can be gradually desorbed to the gas phase. Therefore, it is not necessary to detoxify the ammonia purged from the combustion device 8, the fuel tank 10, the fuel line 20, and the like in a short time.

(4) The floating structure 1 according to a fourth aspect is the floating structure 1 of (1) or (2), in which the floating main structure 2 includes a compartment 30 in which ammonia-related equipment is accommodated and into which outside air is capable of being introduced, and the ammonia introduction unit 262 introduces a gas in the compartment 30 into the absorbing liquid W.

Accordingly, the ammonia leaked in the compartment 30 of the floating main structure 2 can be absorbed by the absorbing liquid W of the absorption tank 61 to be removed. In addition, the ammonia absorbed by the absorbing liquid W can be gradually desorbed to the gas phase to detoxify the absorbing liquid W.

(5) The floating structure 1 according to a fifth aspect is the floating structure 1 of any one of (1) to (4), the floating structure 1 further includes an atmosphere open valve 72 that is capable of closing the atmosphere open line 70, in which the absorption tank 161 is a pressure tank that is capable of being sealed at a pressure higher than an atmospheric pressure.

Accordingly, the pressure inside the absorption tank 161 can be increased. Therefore, the solubility of ammonia in the absorbing liquid W can be adjusted by increasing the pressure in the gas phase.

(6) The floating structure 1 according to a sixth aspect is the floating structure 1 of any one of (1) to (5), the floating structure 1 further includes an exhaust gas dilution unit 64 that is capable of diluting gas of the gas phase, which is released to the atmosphere through the atmosphere open line 70, with a diluting gas.

Accordingly, it is possible to suppress the release of a gas having a high ammonia concentration into the atmosphere from the atmosphere open line 70.

### Industrial Applicability

According to the floating structure of the above aspect, the ammonia can be removed while suppressing an increase in a burden on a worker and fuel consumption. Reference Signs List

- 1:: floating structure
- 2:: floating main structure
- 4:: superstructure
- 5A, 5B:: ship side
- 6:: ship bottom
- 7:: upper deck
- 8:: combustion device
- 10:: ammonia tank
- 20:: pipe system
- 21:: supply pipe
- 22:: return pipe
- 23, 24:: opening-closing valve
- 25:: purge discharge line
- 26:: purge discharge line main body
- 27:: ammonia temporary storage portion
- 28:: opening-closing valve
- 30:: compartment
- 40:: ammonia buffer tank
- 50:: purge gas supply device
- 51:: purge gas supply unit
- 52:: purge gas supply pipe
- 53:: purge gas supply valve
- 60, 260:: ammonia detoxification device
- 61, 161:: absorption tank
- 62,262:: ammonia introduction unit
- 63, 163, 263, 363:: solubility adjustment unit
- 64:: exhaust gas dilution unit
- 65:: introduction line
- 66:: diffuser pipe
- 67, 167:: first diluting gas supply line
- 68:: first blower
- 69:: first valve
- 70, 170:: atmosphere open line
- 71:: release line main body
- 72:: atmosphere open valve
- 74, 174:: second diluting gas supply line
- 75:: second blower
- 76:: second valve
- 81:: third blower
- 82:: absorbing liquid temperature adjustment unit
- 83:: absorbing liquid pH adjustment device
- 84:: acidic fluid introduction device
- 86:: line main body
- 87:: introduction blower
- 88:: introduction blower inlet damper
- 89:: introduction damper
- 91:: air supply equipment
- 92:: exhaust equipment
- 93:: exhaust fan
- 94:: air supply damper
- 95:: air supply duct
- 96:: exhaust damper
- 97:: exhaust duct
- 168:: first compressor
- 192:: exhaust equipment
- 196:: exhaust damper
- 197:: exhaust line
- R:: flow channel

## Claims

1. A floating structure comprising:
a floating main structure that floats on water;
an absorption tank that is provided in the floating main structure and stores an absorbing liquid that is capable of absorbing ammonia;
an atmosphere open line that is capable of releasing a gas phase within the absorption tank to atmosphere;
an ammonia introduction unit that introduces ammonia in the floating main structure into the absorbing liquid stored in the absorption tank; and
a solubility adjustment unit that is capable of adjusting solubility of the ammonia in the absorbing liquid.

2. The floating structure according to Claim 1,
wherein the solubility adjustment unit adjusts the solubility of the ammonia by adjusting at least one of a concentration of the ammonia in the gas phase, a temperature of the absorbing liquid, pH of the absorbing liquid, pH of the gas phase, and a pressure of the gas phase.

3. The floating structure according to Claim 1 or 2, further comprising:
a combustion device that uses the ammonia as fuel;
a fuel tank that stores the ammonia as fuel;
a fuel line that supplies the ammonia from the fuel tank to the combustion device;
a purge gas supply device that supplies a purge gas into the fuel line; and
a purge discharge line that discharges the ammonia in the fuel line pressed by the purge gas,
wherein the ammonia introduction unit introduces the ammonia discharged by the purge discharge line into the absorbing liquid.

4. The floating structure according to Claim 1 or 2
wherein the floating main structure includes a compartment in which ammonia-related equipment is accommodated and into which outside air is capable of being introduced, and
the ammonia introduction unit introduces a gas in the compartment into the absorbing liquid.

5. The floating structure according to any one of Claims 1 to 4, further comprising:
an atmosphere open valve that is capable of closing the atmosphere open line,
wherein the absorption tank is a pressure tank that is capable of being sealed at a pressure higher than an atmospheric pressure.

6. The floating structure according to any one of Claims 1 to 5, further comprising:
an exhaust gas dilution unit that is capable of diluting gas of the gas phase, which is released to the atmosphere through the atmosphere open line, with a diluting gas.
